# EUROPEAN PATENT SPECIFICATION

(11) **EP 2 873 770 B1**
(45) Date of publication and mention of the grant of the patent: **27.12.2017**
(21) Application number: 14186576.6
(22) Date of filing: 26.09.2014
(51) Int. Cl.: D21B 1/02, D21B 1/32, D21B 1/34

(54) **Drum pulper**
Trommelstofflöser
Désintégrateur à tambour

(30) Priority: 15.11.2013 FI 20136122
(43) Date of publication of application: 20.05.2015
(73) Proprietor: Valmet Technologies, Inc., 02150 Espoo (FI)
(72) Inventor: Kankaanpää, Veikko, 02150 Espoo (FI); Aho, Tuomo, 02150 Espoo (FI); Oksman, Risto, 02150 Espoo (FI)
(74) Representative: Kolster Oy Ab

(56) References cited:
- DE-A1-102012 205 721
- GB-A- 1 525 947
- US-A- 1 831 642
- US-A- 2 750 855
- US-A- 4 306 975
- US-A- 4 382 559

## Description

### FIELD OF THE INVENTION

The present invention relates to a processing of fibre material. In particular, the invention relates to drum pulpers for slushing fibre material, especially recycled fibre material.

### BACKGROUND OF THE INVENTION

For recycled fibre material originating for example from old corrugated containers or mixed waste paper to be reused, the recycled fibre material must be processed, e.g. slushed or disintegrated so as to form separate fibres, and washed or purified to separate fibres from different kinds of impurities, such as plastic and metal pieces mixed with the recycled fibre material. The slushing and refining of the recycled fibre material takes place in a pulping system, which may comprise one or more pulpers and washers or purification apparatuses.

The fibre material to be reused for paper or paperboard manufacturing is fed to a pulper, where the recycled fibre material is slushed and mixed with water so as to form a fibre pulp suspension consisting of fibre material and water mixed together. A drum pulper is a type of pulper that may be used to slush recycled fibre material. The drum pulper comprises a drum which rotates in a substantially horizontal position or in a position slightly inclined downwards from the material feed end to the material exit end. The recycled fibre material to be slushed in the drum pulper rises up in the rotating drum and, at some point, falls down to the bottom of the drum, whereby the fibre material hits the bottom of the drum and become slushed. Typically, a drum pulper comprises a slushing part in a first part of the drum. The slushing part of the drum is followed by a screening part intended to recover fibres from the slushed fibre material. Reject drums, in turn, may be used to clean or separate fibres from different kind of impurities, such as plastic and metal pieces mixed with the recycled fibre material.

GB-publication 1525947 A discloses a drum pulper according to the preamble of claim 1.

### BRIEF DESCRIPTION OF THE INVENTION

An object of the present invention is to provide a novel drum pulper for processing fibre material.

The invention is characterized by the features of the independent claim.

According to an embodiment of a drum, the lifter comprises openings for allowing the fibre material to pass through the openings of the lifter.

According to an embodiment of a drum pulper, the lifter is a uniform part of the casing such that in a circumferential direction of the drum the lifter and at least part of the casing are formed of the same casing billet.

According to an embodiment of a drum pulper, the lifter comprises two plate-like portions having edges that face the inner volume of the drum and, the plate-like portions being in connection with each other such that the plate-like portions form an angle opening towards the outer side of the drum.

According to an embodiment of a drum pulper, the lifter is arranged, in a longitudinal direction of the drum, in an oblique position in relation to a centre axis of the drum.

According to an embodiment of a drum pulper, the lifter is directed towards a centre axis of the drum.

According to an embodiment of a drum pulper, the drum comprises a wetting zone for wetting recycled fibre material fed into the drum.

According to an embodiment of a drum pulper, the lifter is arranged to extend over at least one of an entire length of a slushing part and an entire length of a screening part.

According to an embodiment of a drum pulper, the lifter is arranged to extend over an entire length of the drum.

### BRIEF DESCRIPTION OF THE DRAWINGS

In the following the invention will be described in greater detail by means of preferred embodiments with reference to the accompanying drawings, in which
Figure 1 shows schematically a side view of a drum and a drum pulper;
Figure 2 shows schematically a second drum;
Figure 3 shows schematically a third drum;
Figure 4 shows schematically an end view of the drum of Figure 3;
Figure 5 shows schematically a part of a fourth drum;
Figure 6 shows schematically a part of a casing of a drum;
Figure 7 shows schematically a fifth drum,
Figure 8 shows schematically a sixth drum; and
Figures 9, 10 and 11 show a detail of drums of Figures 7 and 8.

For the sake of clarity, the figures show the embodiments in a simplified manner. In the figures, like reference numerals identify like elements.

### DETAILED DESCRIPTION OF THE INVENTION

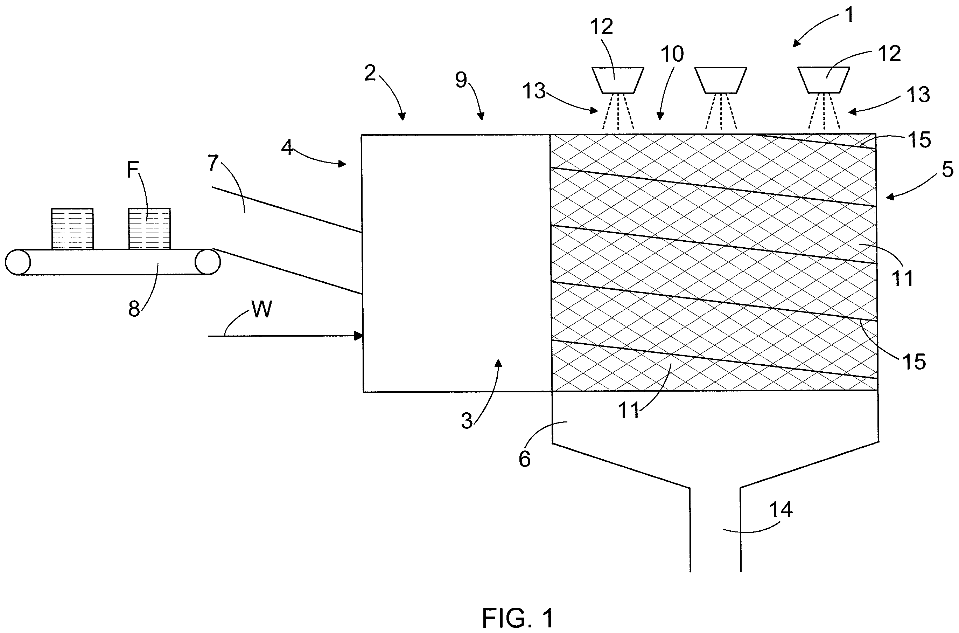

Figure 1 shows schematically a side view of a drum pulper 1 for slushing, i.e. disintegrating, recycled fibre material, such as mixed waste paper or old corrugated containers. The drum pulper 1 of Figure 1 comprises a rotatable drum 2. The drum 2 comprises a casing 3 and a first end 4 or a feed end 4, through which recycled fibre material F to be slushed and water W is fed into the drum 2. The feed of water is denoted by arrow W. The drum 2 also comprises a second end 5 or a discharge end 5 at the opposite end of the drum 2, through which second end 5 a reject portion of the recycled fibre material F fed into the drum 2 is discharged out of the drum 2 for further processing. The first end 4, the second end 5 and the casing 3 together define an inner volume of the drum 2. Below the drum 2 there is a vat 6 for receiving fibres recovered from the recycled fibre material F fed into the drum 2. The recycled fibre material is fed into the drum 2 through a feed channel 7, into which feed channel 7 the recycled fibre material is supplied by a conveyor 8 or other suitable device. The recycled fibre material F may be in the form of whole bales or loose material, Figure 1 representing the recycled fibre material F having a form of whole recycled fibre material bales.

In the drum pulper 1 the recycled fibre material F is slushed by rotating the drum 2 by a rotating device, which is not shown in Figure 1 for the sake of clarity. The drum 2 is positioned either substantially horizontally, as shown in Figure 1, or in a slightly downwards inclined position from the direction of the feed end 4 towards the discharge end 5. The drum 2 comprises a slushing part 9 at the feed end 4 of the drum 2, followed by a screening part 10. At the slushing part 9 the casing 3 of the drum 2 is solid or unbroken, whereas at the screening part 10 the casing 3 of the drum 2 is provided with openings 11.

The recycled fibre material F and water W are fed into the drum 2 through the feed end 4 of the drum 2 so that the fibre material and the water enter the slushing part 9. When the drum 2 is rotated, the fibre material in the slushing part 9 rises up in the rotating drum 2 and, finally, due to gravitational force, falls back down and hits a bottom of the drum 2, whereby the fibre material is slushed, meaning that fibres of the fibre material start to separate from each other so that single fibres, fibre bundles and/or paper, paperboard and/or recycled fibre material bale parts of different sizes form inside the drum. In the slushing part 9 of the drum 2 the fibre material and water also start to mix with each other so as to form a fibre pulp suspension. Because the casing 3 of the drum 2 is solid or unbroken at the slushing part 9, fibres, fibre bundles and/or different fibre material parts separated from the recycled fibre material fed into the drum 2 do not exit the drum 2 at the slushing part 9 of the drum 2. In the longitudinal direction of the drum 2 the casing 3 of the drum 2 may be formed of only one portion or it may comprise several successive portions which together form the entire casing 3 in the longitudinal direction of the drum 2.

From the slushing part 9 the fibre material F and water W move in the drum 2 to the screening part 10. In the screening part 10 the slushing of the fibre material continues, i.e. the fibre material in the screening part 10 also rises up in the rotating drum 2 and falls back down and hits a bottom of the drum 2 due to the gravitational force, the fibre material being thus further slushed. Since the casing 3 of the drum 2 on the screening part 10 is provided with openings 11, fibres, fibre bundles and/or fibre material parts of different sizes separated from the recycled fibre material may leave the drum 2 through the openings 11 and go to the vat 6. At the screening part 10 of the drum 2 the drum pulper 1 may also comprise nozzles 12 for spraying water sprays 13 in order to enhance the separation of the fibres, fibre bundles and/or fibre material parts from the fibre pulp suspension and the transfer of them into the vat 6. The portion of the recycled fibre material which enters the vat 6 provides an accept portion of the drum pulper 1. The fibre pulp suspension that has entered the vat 6 is discharged from the vat 6 through an output channel 14 to further process stages and, finally, to be used for paper or board manufacturing, for example. The portion of the recycled fibre material that has not passed through openings 11 into the vat 6 provides a reject portion of the drum pulper 1 and is discharged from the drum 2 through the discharge end 5 for reject treatment.

Figure 1 also shows, in the screening part 10, lifters 15, which promote the rise of the fibre material when the drum 2 is rotated. The lifters 15 are directed towards the inner volume of the drum 2 and they travel or run or advance in a direction from the feed end 4 of the drum 2 towards the discharge end 5 of the drum 2. The lifters 15 in Figure 1 are arranged to extend over the entire length of the screening part 10 in the longitudinal direction of the drum 2. The lifters 15 are arranged in an inclined position in relation to the longitudinal axis of the drum 2 for enhancing the movement of the fibre material from the direction of the feed end 4 towards the discharge end 5, the inclined lifters 15 causing the fibre material which has risen up with the lifter to fall down to a position closer to the discharge end 5 in relation to the position in which the fibre material started to rise up. The lifters 15 thus also enhance the movement of the fibre material towards the discharge end 5 in the drum 2, whereby it is not only the process pressure and the effect of water and fibre material flows that causes the movement of fibre material towards the discharge end 5. Similar lifters 15 may be arranged to the slushing part 9, too, whereby the lifters 15 in the slushing part 9 may also be arranged to extend over the entire length of the slushing part 9 in the longitudinal direction of the drum 2. The lifters 15 may thus be arranged to extend over at least one of the entire length of the slushing part 9 and the entire length of the screening part 10 in the longitudinal direction of the drum 2. The lifters 15 may also extend over the entire length of the drum 2.

According to an embodiment the lifters 15 are directed towards the centre axis of the drum 2. The extension of the lifters 15 from the inner periphery of the drum 2 towards the centre axis of the drum 2 is 200 - 900mm, preferably 300 - 700mm, whereby, in view of the slushing operation, the lifter 15 is able to lift up such an amount of fibre material that this fibre material portion lifted up has a sufficiently high weight to cause a high pressure when it falls down and hits to the pulp suspension to be slushed at the bottom of the drum.

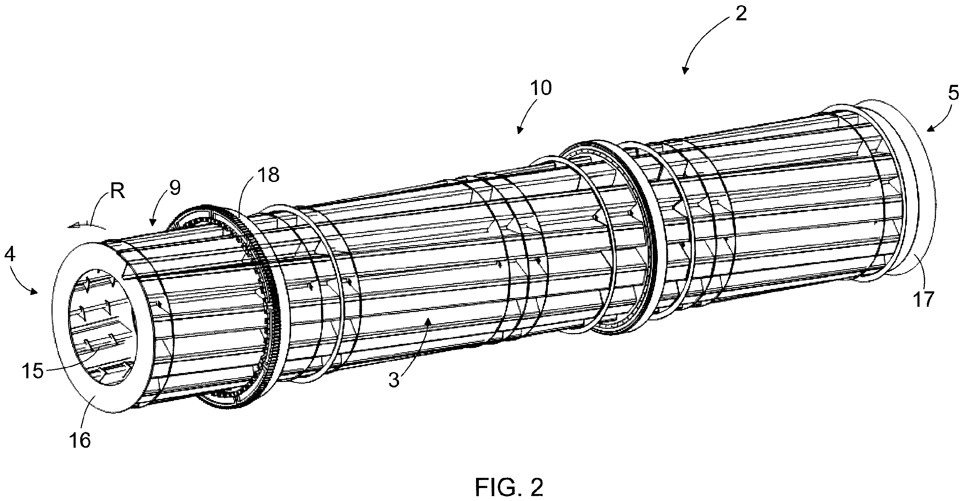

Figure 2 shows schematically a second drum 2 which may for example be used in a drum pulper 1 of Figure 1 for slushing recycled fibre material. The drum 2 comprises a casing 3, a feed end 4 and a discharge end 5. The drum 2 also comprises, at the feed end 4 of the drum 2, a slushing part 9, which is followed by a screening part 10. At the slushing part 9 the casing 3 of the drum 2 is solid or unbroken, whereas at the screening part 10 the casing 3 of the drum 2 is provided with openings which are not shown in Figure 2 for the sake of clarity. Figure 2 also discloses a first end ring 16 at the feed end 4 of the drum 2 and a second end ring 17 at the discharge end 5 of the drum 2, the end rings 16, 17 supporting the structure of the drum 2 at the ends of the drum 2. Figure 2 also discloses support rings 18 at a centre part of the drum 2, which support rings 18 both support the structure of the drum 2 at the centre part of the drum 2 and provide a support of the drum 2 to a bearing support forming a part of an equipment for rotating the drum 2.

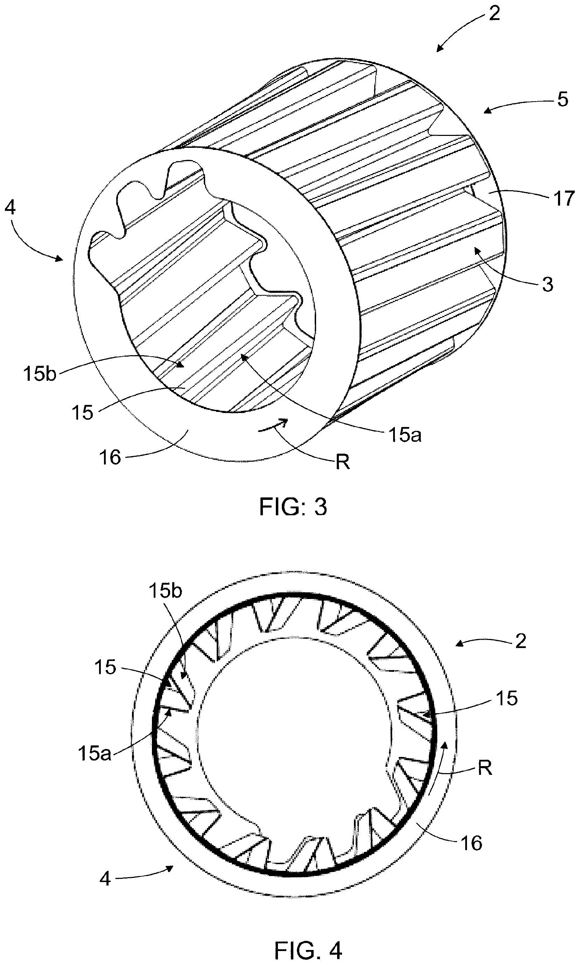

Figure 3 shows schematically a third drum 2, a basic construction of which is similar to the drum 2 of Figure 2, except that the drum 2 of Figure 3 is shorter than the drum 2 of Figure 2. Figure 4 shows schematically an end view of the drum 2 of Figure 3. For the sake of clarity, Figures 3 and 4 do not show any openings 11 in the casing 3 of the drum 2.

The drums 2 of Figures 2 to 4 comprises a number of lifters 15, which are directed towards the inner volume of the drum 2 and arranged to travel or run or advance from the direction of the feed end 4 of the drum 2 towards the discharge end 5 of the drum 2. In the embodiments of Figures 2 to 4 the lifters 15 are uniform parts of the casing 3 such that a lifter 15 is a uniform part of the casing 3 and made of the same casing billet as the rest of the casing 3 that contains no lifters 15 in a circumferential direction of the drum 2. In other words it may be said that in the embodiments of Figures 2 to 4 the lifters 15 are formed as protrusions of the casing 3, which are directed towards the inner volume of the drum 2 such that the casing 3 is arranged to form or provide the lifters 15. The lifter 15 is formed by bending the casing billet. According to an embodiment the lifters 15 are directed towards a centre axis of the drum 2. Again, the extension of the lifters 15 from the inner periphery of the drum 2 towards the centre axis of the drum 2 may be 200 - 900mm, preferably 300 - 700mm,

The lifter 15 shown in Figures 2 to 4 comprises a leading side 15a facing the rotation direction of the drum 2. The rotation direction of the drum 2 is shown schematically with an arrow denoted by reference mark R. The lifter 15 further comprises a trailing side 15b facing the direction opposite to the rotation direction R of the drum 2. The lifter 15 thus comprises two plate-like portions, i.e. the sides 15a and 15b, such that edges of the sides 15a, 15b, which edges point towards the inner volume of the drum 2, are in connection with each other such that between the sides 15a, 15b there is formed an angle which opens towards the outer circumference of the drum 2. The surfaces of the sides 15a and 15b facing the inner volume of the drum 2 contribute to providing a part of an inner circumference of the drum 2.

Similarly as shown in Figure 1, the lifters 15 shown in Figures 2 to 4 are also arranged in an inclined position in relation to the longitudinal axis of the drum 2 for enhancing the movement of the fibre material from the direction of the feed end 4 towards the discharge end 5. Alternatively, the lifters 15 could also be arranged to a position which is parallel to the longitudinal axis of the drum 2, whereby the flow of the fibre material to be slushed from the feed end 4 of the drum 2 towards the discharge end 5 would be caused by the process pressure alone. In the longitudinal direction of the drum 2, the lifters 15 in the slushing part 9 and/or in the screening part 10 may be arranged to extend over the entire length of the slushing part 9 and/or the screening part 10. In the embodiments of Figures 2 to 4, the lifters 15 are arranged to extend over the entire length of the drum 2.

When compared to prior art drums comprising lifters that are originally separate and then welded to the inner surface of the drum, the drum 2 as presented above allows the number of welded seams to be reduced because, at its minimum, the drum 2 may comprise only one welded seam at a point where the free ends of a casing billet arranged to extend over the entire circumference of the drum are fastened to each other. When a number of welded seams is smaller than before, the amount of possibly fragile points may be decreased, which leads to a strong structure of the drum 2. At the same time, a better stiffness of the bent structure is provided than in prior art drums, whereby it is also possible to reduce a wall thickness of the casing of the drum, which reduces total weight of the drum and the mass to be rotated. This, in turn, decreases loads acting on a foundation of the drum pulper, and reduces the amount of energy needed to rotate the drum, whereby also the size and power of the equipment for rotating the drum may be reduced. Also the amount of plate material needed for manufacturing the disclosed drum is smaller than in prior art drums.

In the embodiments of the drums 2 shown in Figures 2 to 4, one casing billet may extend over the entire length of the drum 2. However, long drums may be provided with several successive casing billets in the longitudinal direction of the drum 2. In its circumferential direction, the drum 2 may comprise one casing billet only or several successive seamed-on casing billets may be provided.

In the embodiments of the drums 2 shown in Figures 2 to 4, the form of the outer surface of the casing 3 follows the form of the inner surface of the casing 3. However, in case a casing with a cylindrical outer surface is preferred, the casing 3 may be made as a two-layer structure where the inner layer in the casing is as disclosed above in Figures 2 to 4, for example, and the outer layer in the casing has a cylindrical form.

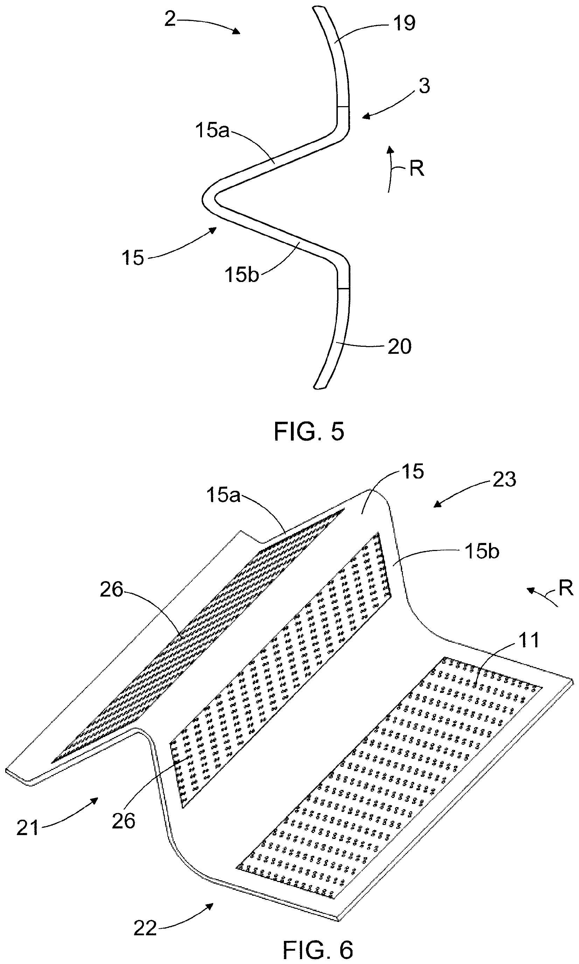

Figure 5 shows schematically also an embodiment of a drum 2, Figure 5 showing only partly the drum 2, where a lifter 15 is also a uniform part of a casing 3 of the drum 2. In the embodiment of Figure 5, the lifter 15 is made of a sheet-like billet which is bent for providing two plate-like portions forming a leading side 15a and a trailing side 15b of the lifter 15 such that the sides 15a, 15b are in connection with each other at their edges that point towards the inner volume of the drum 2, whereby between the sides 15a, 15b there is formed an angle which opens towards the outer circumference of the drum 2. The free edges of the sides 15a, 15b, which edges are opposite to the edges connected together, are fastened for example by welding or mechanically to other billets 19, 20 intended to form parts of the casing 3 having an arc-like form and comprising no lifters 15. In this case the billet of the casing comprising the lifter 15 and the billets 19, 20 together provide at least part of the casing 3 of the drum 2. For the sake of clarity, Figure 5 does not show any openings 11 in the casing 3 of the drum 2.

If the drum 2 as presented in Figure 5 would be provided with only one lifter 15, the billets 19, 20 could in fact present a single billet bent into a circular shape, whereby the billet comprising the lifter 15 could be fastened between the free ends of the billet bent into the circular shape. However, for stable running of the drum 2 the drum 2 comprises several lifters 15 arranged in positions providing a symmetrical structure in the drum 2.

In the drum 2 of Figure 5, the lifter 15 is also a uniform part of the casing 3 of the drum 2. However, when considering the difference between the drums 2 of Figures 2 to 4 and the drum 2 of Figure 5, the lifter 15 in the drum 2 of Figure 5 is not made of the same billet as those parts of the casing 3 not comprising any lifters 15. In the drum 2 of Figure 5 the lifters 15 may be fastened to other billets contributing to provide the casing 3 at the outer circumference of the casing 3, whereby the manufacturing of the drum 2 is simpler and more efficient than the manufacturing of prior art drums where the lifters 15 are fastened to the inner surface of the drum 2.

A substantially similar lifter and a drum as shown in Figure 5 may also be provided by a single casing billet arranged to extend over the entire periphery of the casing to be manufactured so that only the two free ends of the billet must be attached together for forming the casing, the lifters 15 being provided by bending the casing billet, for example. Alternatively, the drum 2 may comprise several successive seamed-on casing billets in the circumferential direction of the drum 2, the casing billets comprising lifters 15 formed by bending the casing billets, for example.

A substantially similar lifter and a drum as shown in Figure 5 may also be provided by a lifter 15 having sides 15a, 15b that are originally separate sheet-like billets which are then fastened to each other at their edges which are arranged to point towards the inner volume of the drum 2.

Figure 6 discloses schematically a part 23 of a casing 3 of a drum 2, at a screening part 10 of the drum 2, for providing a more detailed view of an embodiment of the drum 2. A first portion 21 of the part 23 comprises a lifter 15 having a leading side 15a and a trailing side 15b. A second portion 22 of the part 23 comprises a portion intended to provide an arc-like portion of the casing 3. In the embodiment of Figure 6, both the leading side 15a of the lifter 15 and the trailing side 15b of the lifter 15 as well as the second portion 22 intended to provide the arc-like portion of the casing 3 comprise openings 11, 26 arranged through the part 23, wherein reference number 11 refers to the openings in the casing 3 in a portion not comprising any lifters 15 and reference number 26 refers to the openings arranged in the lifter 15. The openings 11, 26 are arranged in each portion of the casing part 23 in crocodiles in the circumferential direction of the drum 2 such that in each pair of openings 11, 26 the openings 11, 26 are in a somewhat inclined position in relation to each other.

It is also possible to have an embodiment of the drum, wherein the entire casing 3, starting from the first end 4 of the drum 2, is provided with openings 11. The drum 2 of that kind comprises only a screening part 10 but does not comprise any specific slushing part 9 with solid or unbroken casing 3, or in other words the screening part 10 is arranged to extend over the entire length of the drum 2. In that kind of an embodiment of the drum the screening part 10 of the drum 2 is thus arranged to begin from the first end 4 of the drum 2.

The shape and size of the openings 11, 26 may vary in many ways. The cross-section of the openings 11 in a direction of a plane of the casing 3 may thus be round or elongated, for example. In a direction through the casing 3 the openings 11 may have a cylindrical, conical or bevelled form. If the shape of the openings 11 is round, the diameter of the opening 11 may be for example 1 to 30mm, preferably 2 to 20mm and more preferably 3 to 15mm. If the size or area of the openings 11, 26 in the screening part 10 is arranged to increase in the direction from the feed end 4 of the drum 2 towards the discharge end 5, the diameter of the openings 11 closer to the feed end 4 of the drum 2 may be for example 2 to 12mm, increasing to a value of 4 to 16mm and further to a value of 6 to 20mm towards the discharge end 5 of the drum 2. If the size or area of the openings 11 in the screening part 10 is arranged to decrease in the direction from the feed end 4 of the drum 2 towards the discharge end 5, the diameter of the openings 11 closer to the feed end 4 of the drum 2 may be for example 6 to 20mm, decreasing to a value of 4 to 16mm and further to a value of 2 to 12mm towards the discharge end 5 of the drum 2. When the size of the opening is arranged either to increase or decrease in the longitudinal direction of the drum 2, different accept portions of the fibre material with different properties can be recovered at different portions of the drum 2. Alternatively, fibre material separated from the recycled fibre material still under slushing in the drum and having a size smaller or equal to the size of the openings can be removed out of the drum as soon as possible, which increases the capacity of the drum. Cylindrical openings may also comprise, in the direction going through the casing 10, two or more successive portions having a different diameter.

If the shape of the openings 11, 26 is elongated, a width of the openings 11 may be for example 1 to 15mm, preferably 2 to 10mm. A length of the elongated openings may be 10 to 120mm, preferably 15 to 80mm and more preferably 20 to 60mm. An elongated, narrow opening has good screening properties and, due to a large open surface area, it provides a high capacity.

The shape, size and mutual placing of the openings 11, 26 may vary in many ways. The casing 3 and the lifters 15 of one and the same drum 2 may also comprise openings 11, 26 having different shapes and sizes.

In the embodiment of Figure 6, both the leading side 15a of the lifter 15 as well as the trailing side 15b of the lifter 15 are provided with openings 26. However, an embodiment of a drum where either only the leading side 15a of the lifter 15 or only the trailing side 15b of the lifter 15 is provided with openings 26 is also possible.

A total open area of the screening part 10 provided by the open areas of the openings 11, 26 may vary between 10 and 40%. The total open area of the screening part 10 is thus quite large so that a high screening capacity of the drum may be achieved. However, because the size of the individual openings is limited, an entry of foreign materials, such as plastic, into the accept portion of the fibre material may be prevented.

When at least one of the sides 15a, 15b of the lifter 15 is provided with openings 26, the total area of the openings 11, 26 in the drum 2 is larger than in that of drums 2 not comprising any openings 26 in the lifters 15, whereby the filtering capacity of the drum 2 increases. When the infiltration of the fibre material out of the drum 2 becomes more efficient, the length of the drum 2 may be decreased. Additionally, because of the larger total area of the openings in the drum 2 than before, the water of the water sprays 13 sprayed by the nozzles 12 towards the outer surface of the drum 2 may flow more efficiently inside the drum 2, whereby flow of water of the water sprays 13 straight into the vat 6 below the drum 2 may be avoided, which also makes the infiltration of the fibre material out of the drum 2 more efficient.

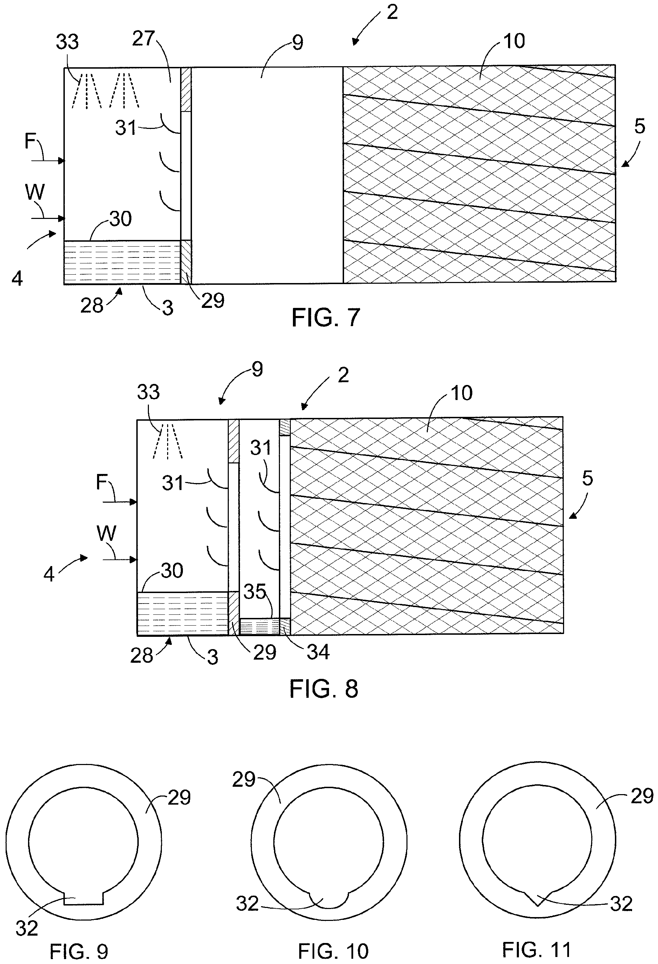

Figure 7 shows schematically, partly in cross-section, a fifth drum 2 which may be used in a drum pulper 1 for slushing recycled fibre material. The drum 2 comprises a feed end 4 and a discharge end 5 as well as a slushing part 9 followed by a screening part 10. The drum 2 in Figure 7 further comprises a wetting part 27 preceding the slushing part 9, the casing 3 at the wetting part being solid or unbroken. The wetting part 27 is separated from the slushing part 9 with a ring element 29, which provides a ring-like partition wall between the wetting part 27 and the slushing part 9, the ring element 29 being arranged to extend from the inner surface of the casing 3 for some distance towards a centre axis of the drum 2. On a lower portion of the drum 2, the casing 3 on the wetting part 27 together with the ring element 29 and the first end 4 of the drum 2 define a wetting zone 28, where the fluid level 30 is higher than in other parts of the drum 2.

In the wetting zone 28 of the wetting part 27 the high fluid level 30 provides a volume of fluid causes the recycled fibre material fed into the drum 2 (shown by arrow F) to become wetted efficiently before it flows onward into the slushing part 9 of the drum 2. The wetting part 27 may also comprise scoops 31 for transferring wetted fibre material into the slushing part 9. Additional water enhancing the wetting of the fibre material may be supplied into the wetting part for example by water sprays 33 or as an overflow through a supply trough. The ring element 29 may also comprise a cavity 32 or recess 32, the shape of which may be rectangle, a curved or a sharp peak pointed such that the sides of the sharp peak cavity 29 are arranged to converge towards the direction of the outer periphery of the ring element 29. These different shapes of the cavity 32 are disclosed in Figures 9, 10 and 11, wherein the ring element is shown as seen from the end of the drum. The cavity 32 provides an overflow which allows water to flow from the wetting part 27 onward in the drum 2. This water flow may also contain fibres, fibre bundles and/or fibre material parts of different sizes possibly separated from the recycled fibre material already in the wetting part 27. The shape of the cavity 32 may also differ from those presented above. It is also possible that there is no cavity at all.

When the fibre material which has become at least partly wetted already in the wetting part 27 enters the slushing part 9, the slushing of the material in the slushing part 9 is more effective and starts sooner, whereby the capacity of the drum 2 increases. Also the length of the slushing part 9 in relation to the total length of the drum 2 may be reduced. The wetting part 27 may also comprise lifters for intensifying wetting and slushing of the fibre material.

The height of the ring element 29 is dimensioned such that the wetting zone 28 provided in the wetting part 27 has a sufficiently large volume for effective wetting. The minimum height of the ring element 29 towards a centre axis of the drum in the cavity 32 may be for example 0.5 to 2m, preferably 0.6 to 1.6m or more preferably 0.8 to 1.2m.

Figure 8 shows schematically, partly in cross-section, a sixth drum 2 which may be used in a drum pulper 1 for slushing recycled fibre material. The drum 2 comprises a feed end 4 and a discharge end 5 as well as a slushing part 9 followed by a screening part 10. The drum 2 of Figure 8 further comprises a wetting zone 28 arranged at the beginning of the slushing part 9. The wetting zone 28 is separated from the rest of the slushing part 9 with a ring element 29, the casing 3 at the slushing part 9 together with the ring element 29 and the first end 4 of the drum 2 defining the wetting zone 28 on a lower portion of the drum 2, where the fluid level 30 is higher than in the rest of the drum 2. The wetting zone 28 may extend from the first end 4 of the drum 2 on a portion of the length of the slushing part 9 or on the entire length of the slushing part 9 in the longitudinal direction of the drum 2. In the embodiment of Figure 8 the slushing part 9 is thus arranged to provide a wetting zone 28 for wetting the recycled fibre material to be fed into the drum 2. The portion of the drum comprising the wetting zone 28 may also comprise lifters for intensifying wetting and slushing of the fibre material.

Figure 8 shows schematically also a second ring element 34 which is arranged between the slushing part 9 and the screening part 10 such that the second ring element 34 provides a ring-like partition wall between the slushing part 9 and the screening part 10. The general structure of the second ring element 34 may be similar to that of the ring element 29. The height of the second ring element 34 is dimensioned such that the fluid level 35 in the slushing part 9 between the wetting zone 28 and the screening part 10 is lower or the same as the fluid level 30 in the wetting zone 28. The slushing part 9 between the wetting zone 28 and the screening part 10 may also be provided with scoops 31 for transferring fibre material from the slushing part 9 to the screening part 10. A similar second ring element 34 may be arranged between the slushing part 9 and the screening part 10 in the drum 2 of Figure 7.

In the examples presented above the drum 2 was applied in a drum pulper 1 for slushing recycled fibre material, whereby the drum pulper 1 provided with the drum 2 as presented above may be used as a primary pulper in a pulping process for providing a first slushing of the recycled fibre material and forming of fibre pulp suspension by mixing the fibre material with water. Alternatively the drum pulper 1 provided with the drum 2 as presented above may be used as a secondary pulper, whereby the drum 2 of the drum pulper 1 receives recycled fibre material in a form of a fibre pulp suspension provided by a primary pulper, whereby the secondary pulper continues the slushing and screening of the recycled fibre material. Furthermore, the drum 2 as presented above may be used as a reject drum, wherein fibres are separated from different kind of impurities, like plastic parts or metal parts, possibly ended up into the recycled fibre material. In that case the drum 2 does not necessarily comprise any slushing part 9.

The invention and its embodiments are not limited to the examples described above but may vary within the scope of the claims.

## Claims

1. A drum pulper (1) for slushing fibre material (F), the drum pulper (1) comprising a drum (2), the drum (2) comprising a first end (4), a second end (5) and a casing (3) that together define an inner volume of the drum (2), and at least one lifter (15) directed towards the inner volume of the drum (2), **characterized in that** the at least one lifter (15) is formed as a protrusion of the casing (3), which is directed towards the inner volume of the drum (2) such that the casing (3) is arranged to provide the lifter (15) and that the lifter (15) is formed by bending a sheet-like casing billet of the casing (3) of the drum (2).

2. A drum pulper as claimed in claim 1, **characterized in that** the lifter (15) comprises openings (26) for allowing the fibre material (F) to pass through the openings (26) of the lifter (15).

3. A drum pulper as claimed in claim 1 or 2, **characterized in that** in a circumferential direction of the drum (2) the lifter (15) and at least part of the casing (3) are formed of the same casing billet.

4. A drum pulper as claimed in any one of the preceding claims, **characterized in that** the lifter (15) comprises two plate-like portions having edges that face towards the inner volume of the drum (2), the plate-like portions being in connection with each other such that the plate-like portions form an angle opening towards the outer side of the drum (2).

5. A drum pulper as claimed in any one of the preceding claims, **characterized in that** the lifter (15) is arranged, in a longitudinal direction of the drum (2), in an oblique position in relation to a centre axis of the drum (2).

6. A drum pulper as claimed in any one of the preceding claims, **characterized in that** the lifter (15) is directed towards a centre axis of the drum (2).

7. A drum pulper as claimed in any one of the preceding claims, **characterized in that** the drum (2) comprises a slushing part (9) followed by a screening part (10), the casing (3) of the drum (2) being solid at the slushing part (9) and being provided with openings (11) at the screening part (10), and that the lifter (15) is arranged to extend over at least one of an entire length of the slushing part (9) and an entire length of the screening part (10).

8. A drum pulper as claimed in any one of the preceding claims, **characterized in that** the lifter (15) is arranged to extend over an entire length of the drum (2).

## Patentansprüche

1. Trommelstofflöser (1) zum Auflösen von Fasermaterial (F), wobei der Trommelstofflöser (1) eine Trommel (2), wobei die Trommel (2) ein erstes Ende (4), ein zweites Ende (5) und ein Gehäuse (3), die zusammen ein inneres Volumen der Trommel (2) definieren, umfasst, und mindestens einen Heber (15) umfasst, der zu dem inneren Volumen der Trommel (2) gerichtet ist,
**dadurch gekennzeichnet, dass** der mindestens eine Heber (15) als ein Vorsprung des Gehäuses (3) ausgebildet ist, der so zu dem inneren Volumen der Trommel (2) gerichtet ist, dass das Gehäuse (3) zum Bereitstellen des Hebers (15) eingerichtet ist und dass der Heber (15) durch Biegen eines blechartigen Gehäuserohlings des Gehäuses (3) der Trommel (2) ausgebildet ist.

2. Trommelstofflöser nach Anspruch 1, **dadurch gekennzeichnet, dass** der Heber (15) Öffnungen (26), um dem Fasermaterial (F) zu erlauben, durch die Öffnungen (26) des Hebers (15) hindurchzugelangen, umfasst.

3. Trommelstofflöser nach Anspruch 1 oder 2, **dadurch gekennzeichnet, dass** in einer Umfangsrichtung der Trommel (2) der Heber (15) und mindestens ein Teil des Gehäuses (3) aus dem gleichen Gehäuserohling ausgebildet sind.

4. Trommelstofflöser nach einem der vorstehenden Ansprüche, **dadurch gekennzeichnet, dass** der Heber (15) zwei plattenartige Abschnitte mit Kanten umfasst, die zu dem inneren Volumen der Trommel (2) weisen, wobei die plattenartigen Abschnitte so miteinander in Verbindung stehen, dass die plattenartigen Abschnitte einen Winkel bilden, der sich zu der Außenseite der Trommel (2) öffnet.

5. Trommelstofflöser nach einem der vorstehenden Ansprüche, **dadurch gekennzeichnet, dass** der Heber (15) in einer Längsrichtung der Trommel (2) in einer schrägen Position in Beziehung zu einer Mittelachse der Trommel (2) eingerichtet ist.

6. Trommelstofflöser nach einem der vorstehenden Ansprüche, **dadurch gekennzeichnet, dass** der Heber (15) zu einer Mittelachse der Trommel (2) gerichtet ist.

7. Trommelstofflöser nach einem der vorstehenden Ansprüche, **dadurch gekennzeichnet, dass** die Trommel (2) ein Auflösungs-Teil (9), gefolgt von einem Sieb-Teil (10), umfasst, wobei das Gehäuse (3) der Trommel (2) an dem Auflösungs-Teil (9) vollwandig ist und bei dem Sieb-Teil (10) mit Öffnungen (11) versehen ist, und dass der Heber (15) eingerichtet ist, um sich über mindestens eine von einer gesamten Länge des Auflösungs-Teils (9) und einer gesamten Länge des Sieb-Teils (10) zu erstrecken.

8. Trommelstofflöser nach einem der vorstehenden Ansprüche, **dadurch gekennzeichnet, dass** der Heber (15) eingerichtet ist, um sich über eine gesamte Länge der Trommel (2) zu erstrecken.

## Revendications

1. Désintégrateur à tambour (1) pour la trituration d'une matière fibreuse (F), le désintégrateur à tambour (1) comprenant un tambour (2), le tambour (2) comprenant une première extrémité (4), une seconde extrémité (5) et une enveloppe (3) qui ensemble définissent un volume interne du tambour (2), et au moins un dispositif de levage (15) orienté en direction du volume interne du tambour (2), **caractérisé en ce que** ledit au moins un dispositif de levage (15) est réalisé sous la forme d'une saillie de l'enveloppe (3), qui est orientée en direction du volume interne du tambour (2) d'une manière telle que l'enveloppe (3) est conçue pour procurer le dispositif de levage (15) et **en ce que** le dispositif de levage (15) est réalisé par pliage d'une billette en forme de feuille, de l'enveloppe (3) du tambour (2).

2. Désintégrateur à tambour selon la revendication 1, **caractérisé en ce que** le dispositif de levage (15) comprend des ouvertures (26) pour permettre à la matière fibreuse (F) de passer par les ouvertures (26) du dispositif de levage (15).

3. Désintégrateur à tambour selon la revendication 1 ou 2, **caractérisé en ce que**, dans une direction circonférentielle du tambour (2), le dispositif de levage (15) et au moins une partie de l'enveloppe (3) sont réalisés à partir de la même billette d'enveloppe.

4. Désintégrateur à tambour selon l'une quelconque des revendications précédentes, **caractérisé en ce que** le dispositif de levage (15) comprend deux portions en forme de plaques dont les bords sont orientés en direction du volume interne du tambour (2), les portions en forme de plaques étant reliées l'une à l'autre d'une manière telle que les portions en forme de plaques forment un angle s'ouvrant en direction du côté externe du tambour (2).

5. Désintégrateur à tambour selon l'une quelconque des revendications précédentes, **caractérisé en ce que** le dispositif de levage (15) est disposé, dans une direction longitudinale du tambour (2), dans une position oblique par rapport à un axe central du tambour (2).

6. Désintégrateur à tambour selon l'une quelconque des revendications précédentes, **caractérisé en ce que** le dispositif de levage (15) est orienté en direction d'un axe central du tambour (2).

7. Désintégrateur à tambour selon l'une quelconque des revendications précédentes, **caractérisé en ce que** le tambour (2) comprend une partie de trituration (9) suivie d'une partie de classage (10), l'enveloppe (3) du tambour (2) étant pleine dans la partie de trituration (9) et étant munie d'ouvertures (11) dans la partie de classage (10), et **en ce que** le dispositif de levage (15) est conçu pour s'étendre sur au moins une longueur choisie parmi une longueur totale de la partie de trituration (9) et une longueur totale de la partie de classage (10).

8. Désintégrateur à tambour selon l'une quelconque des revendications précédentes, **caractérisé en ce que** le dispositif de levage (15) est conçu pour s'étendre sur une longueur totale du tambour (2).
